# EUROPEAN PATENT APPLICATION

(11) **EP 1 306 041 A1**
(43) Date of publication of application: **02.05.2003**
(21) Application number: 02021827.7
(22) Date of filing: 27.09.2002
(51) Int. Cl.: A47J 31/40

(54) **Movement device for an infusion dispenser assembly, particularly for espresso coffee machines**

(30) Priority: 26.10.2001 IT MI20012262
(71) Applicant: Omnimatic S.p.A., 20083 Gaggiano (Milan) (IT)
(72) Inventor: Mestek, Claudio, 20127 Milan (IT)
(74) Representative: Modiano, Guido, Dr.-Ing.

(57) **Abstract**

A movement device for infusion dispenser assemblies, particularly for espresso coffee machines, which comprises a dispenser body (1) that forms an infusion chamber (6) and is rotatably supported by a supporting frame (2). A lower or dispensing piston (10) can move in the infusion chamber (6) and an upper or infusion piston (11) can be inserted in the infusion chamber (6). Actuation means (20,31) for actuating the lower piston (10) being suitable to guide positively the translational motion of the lower piston during the upward or expulsion stroke and during the descent or return stroke, said actuation means comprising disk-like cam rotatably supported on the rotation axis of the dispenser body.

## Description

The present invention relates to a movement device for an infusion dispenser assembly, particularly for espresso coffee machines.

As is known, espresso coffee dispenser assemblies usually used in superautomatic machines have an infusion chamber that can move from a position in which the infusion piston is inserted therein to a position in which the infusion chamber lies below the coffee loading hopper.

In these dispenser assemblies, a lower piston or dispensing piston can slide inside the infusion chamber and is also meant to expel the pellet of coffee powder once the infusion has been produced.

In the solutions of the known art, the dispensing piston is guided during the upward stroke or expulsion stroke in order to expel the pellet, while return is performed by way of elastic means that return the dispensing piston to the lower position of the infusion chamber.

With this embodiment, considerable drawbacks currently occur due to the wear of the elastic means that constitute the return spring and to the inevitable deposits of coffee, and therefore cases can occur in which the piston does not return correctly to the lower position of the infusion chamber, with the possibility of sticking.

Moreover, another problem is constituted by the fact that very complicated means for synchronizing the movement of the infusion piston with respect to the infusion chamber are required, with significant manufacturing problems and a high possibility of damage or sticking.

The aim of the invention is indeed to eliminate the drawbacks noted above, by providing a movement device for an infusion dispenser assembly, particularly for espresso coffee machines, that allows to optimize the return stroke of the infusion piston, preventing absolutely the lower piston or dispensing piston from failing to position itself correctly with respect to the infusion chamber.

Within this aim, a particular object of the invention is to provide a movement device in which there is always a precise synchronization between the movement of the lower piston and the movement of the infusion chamber, which must oscillate from the loading position to the working position, in which the infusion piston is inserted.

Another object of the present invention is to provide a movement device, which, by virtue of its particular constructive characteristics, is capable of giving the greatest assurances of reliability and safety in use.

Still another object of the invention is to provide a movement device for an infusion dispenser assembly, particularly for espresso coffee machines, that can be obtained easily starting from commonly commercially available elements and materials and is furthermore competitive from a purely economical standpoint.

This aim and these and other objects that will become better apparent hereinafter are achieved by a movement device for infusion dispenser assemblies, particularly for espresso coffee machines, according to the present invention, which comprises a dispenser body that forms an infusion chamber and is supported by a supporting frame, a lower piston or dispensing piston being movable in said infusion chamber, an upper piston or infusion piston being insertable in said infusion chamber, characterized in that it comprises means for actuating said lower piston which are suitable to guide positively the translational motion of said lower piston during the upward or expulsion stroke and during the descent or return stroke.

Further characteristics and advantages will become better apparent from the description of a preferred but not exclusive embodiment of a movement device for the infusion dispenser assembly, particularly for espresso coffee machines, illustrated by way of non-limitative example with the aid of the accompanying drawings, wherein:
Figure 1 is a partially sectional view of the device according to the invention during the loading of the coffee powder;
Figure 2 is a view of the position of the actuation lever of the infusion piston in the coffee loading position;
Figure 3 is a view of the device during infusion;
Figure 4 is a view of the position of the actuation lever of the infusion piston during infusion;
Figure 5 is a view of the device during the expulsion of the coffee powder pellet;
Figure 6 is a view of the disk-like cam that constitutes the actuation means, taken from the face provided with the means for guiding the lower piston;
Figure 7 is a perspective view of the disk-like cam, taken from the face provided with the cam-like path for guiding the oscillation of the dispenser body;
Figure 8 is a perspective view of the lever for moving the actuation means;
Figure 9 is a perspective view of the dispenser body.

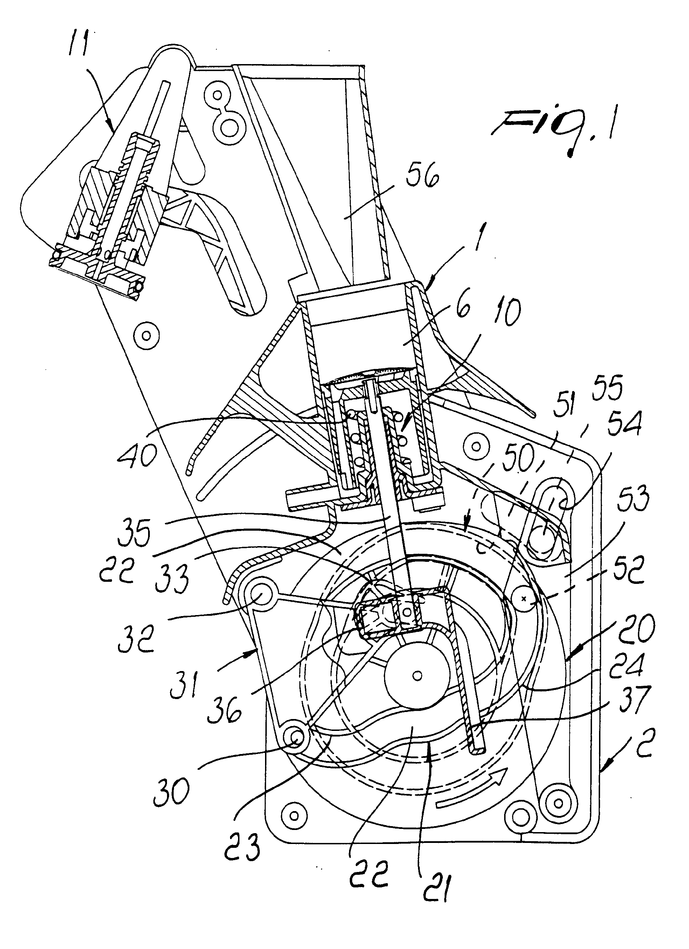

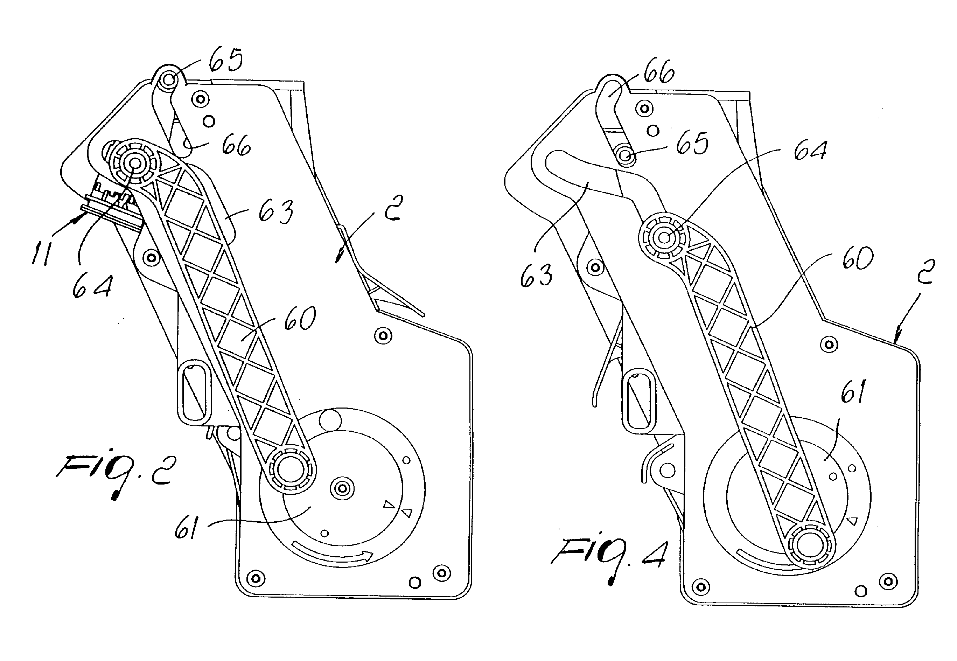

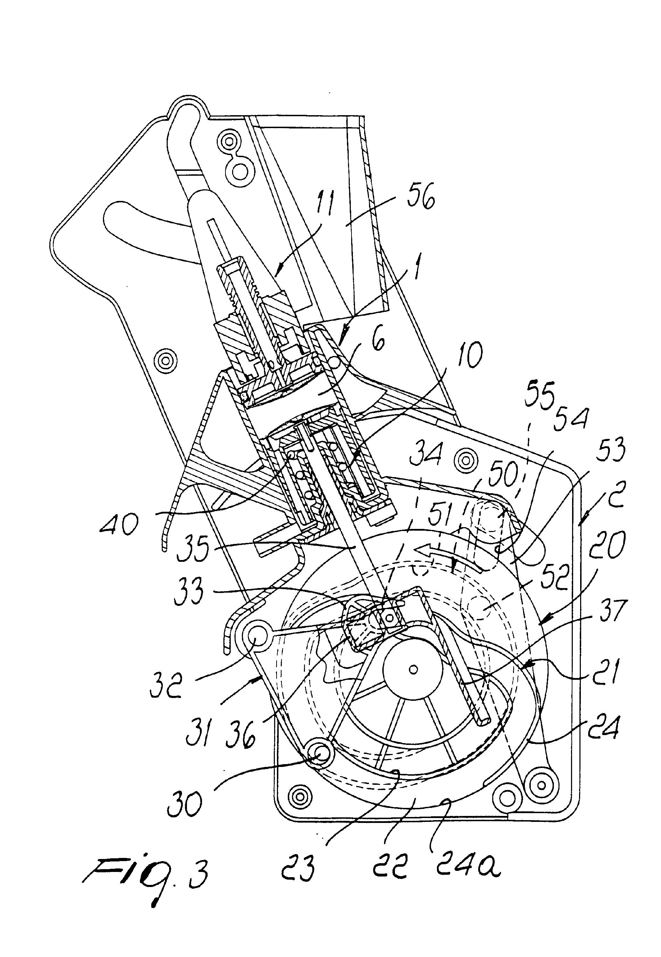

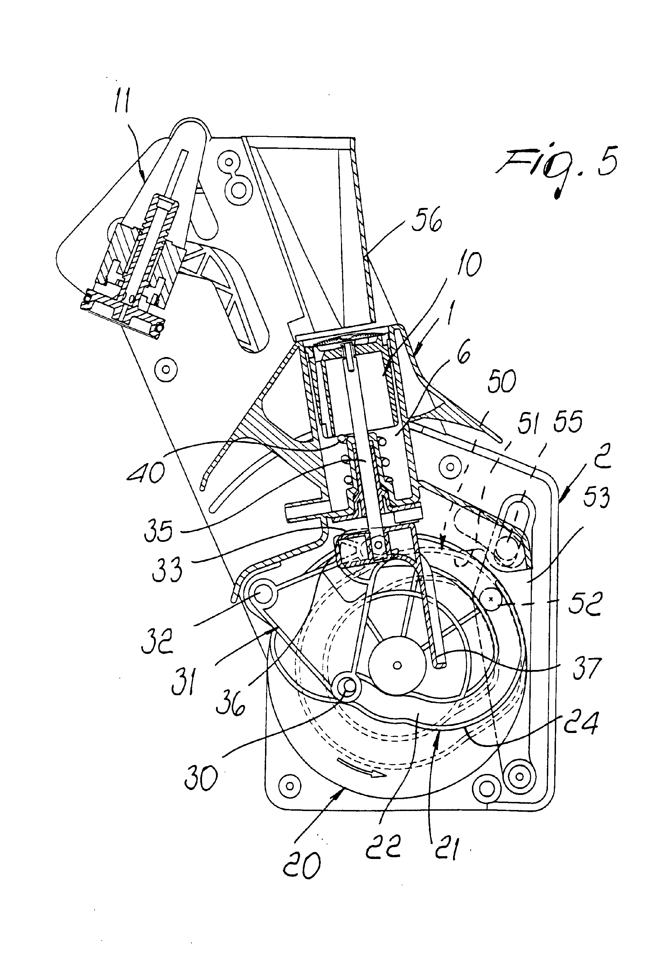

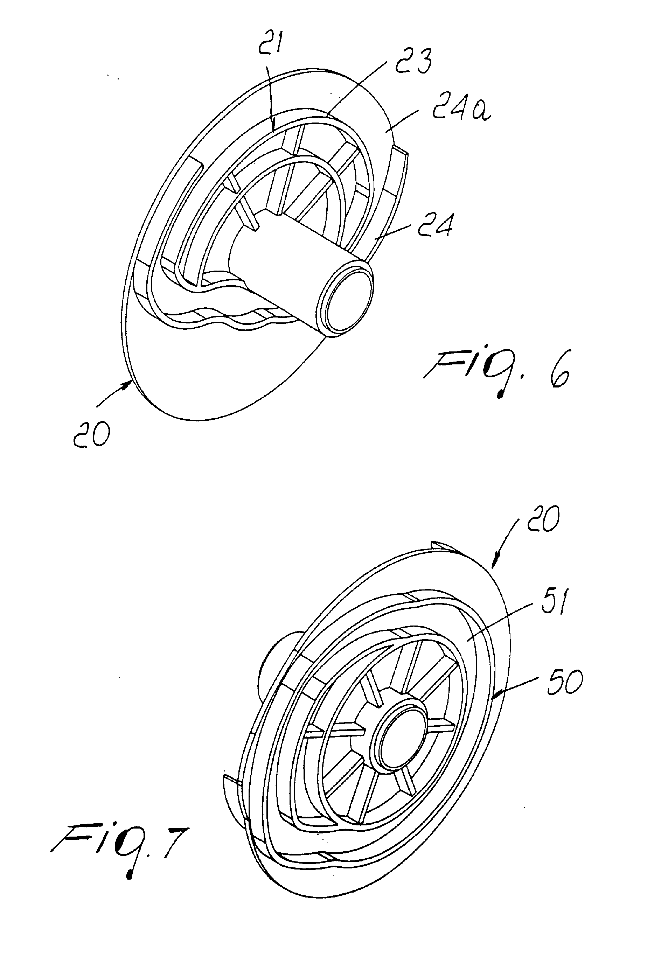

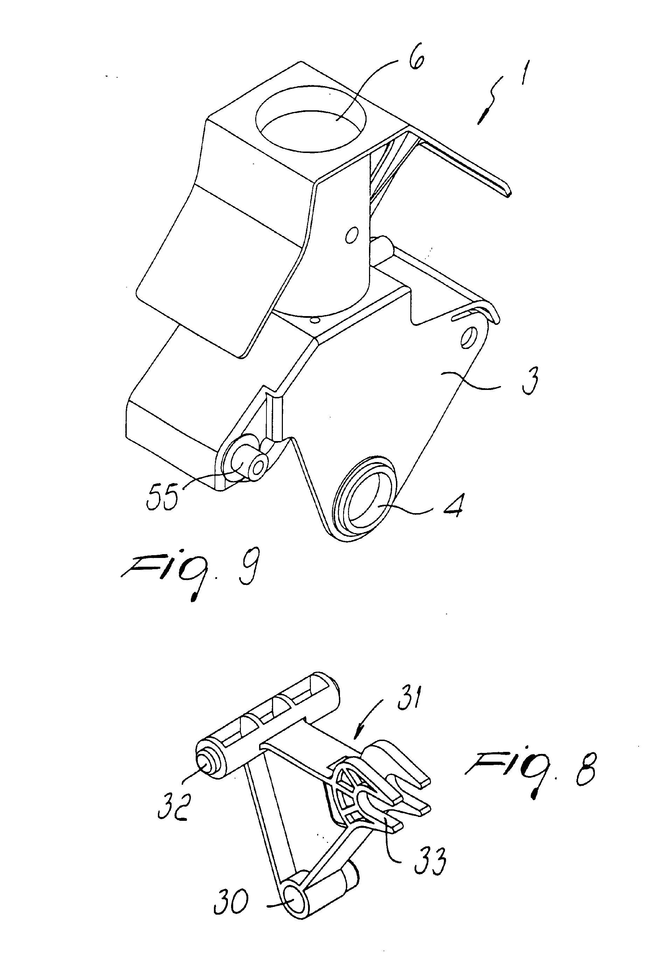

With reference to the figures, the movement device for infusion dispenser assemblies, particularly for espresso coffee machines, according to the present invention, comprises a dispenser body, generally designated by the reference numeral 1, which is supported so that it can oscillate by a supporting structure or frame, designated by the reference numeral 2, which is constituted by sides that will be described better hereinafter.

The body 1 has two lugs 3, which are provided with or form each a seat 4 that is arranged coaxially to the oscillation axis of the body 1.

The body 1 forms an infusion chamber 6, in which a lower or dispenser piston, generally designated by the reference numeral 10, can move. An infusion or upper piston 11 can also be inserted in the infusion chamber and is supported by the sides 2 that constitute the supporting structure.

The particularity of the invention is constituted by the fact that there are means for the actuation of the lower piston that guide positively the translational motion of the lower piston 10 during the upward or expulsion stroke for expelling the coffee power pellet and during the descent or return stroke.

Said actuation means are constituted by a disk-like cam 20, which is supported rotatably on the axis that passes through or is formed by the seats 4 and has, on one face, a first cam, generally designated by the reference numeral 21, that forms a track 22 delimited by a continuous internal edge 23 and by an outer rim 24.

A first cam follower 30 engages the track 22 and is provided on a movement lever 31 that is pivoted at 32 to the body 1 and is provided with an actuation fork 33 that engages rollers 34 connected to the lower end of a stem 35 that enters hermetically the infusion chamber 6 and is connected to the lower piston.

The stem 35 is rigidly coupled to a block 36 provided with a guiding arm 37 that can engage by contact the cylindrical body that protrudes from the face provided with the first cam 21 of the disk-like cam 20 so as to provide a continuous contact.

It should be specified that the outer rim 24 has a lower gap 24a that arranges itself in the lower position when the lower piston is in its lower position, so that if an excessive dose of coffee powder is present, by compressing the compensation spring 40 that acts on the lower face of the lower piston it is possible to provide an additional downward stroke for the lower piston without causing any forcing.

The disk-like cam 20 has, on its opposite face, a second cam, designated by the reference numeral 50, which forms a second closed track 51 that is engaged by a second cam follower 52, which is connected to an actuation lever for the actuation of the oscillation of the body 1; said lever is designated by the reference numeral 53 and is provided with a slot 54 that can engage a pin 55 formed on the body 1.

The oscillation of the lever 53 causes the oscillation of the body 1 in perfect synchronization with all the operating steps in order to provide the oscillation of the body 1 from the loading position, in which it is arranged below the coffee loading hopper 56, to the normal operating position, in which it is arranged below the infusion piston 51.

For the sake of completeness in description, it is noted that the infusion piston is actuated, in its stroke for entering the infusion chamber 6 and in its extraction stroke for expelling the pellet, by a lever of the infusion piston 60 that is connected to an eccentric element 61, which can be accessed on the sides 2 and can move in a lower slot 63 in which a lower pin 64 can slide; said lower pin is connected to the lower part of the infusion piston, which is in turn provided with an upper pin 65 that engages in an upper slot 66 so as to obtain, at the end of the step for translational motion inside the infusion chamber, a spacing oscillation in order to allow the pellet expulsion step.

With the arrangement described above it is important to note that means for actuating the lower piston have been provided which allow to guide the stroke of the lower piston both in the rising step and in the descent step, absolutely eliminating the possibility of sticking.

Another important aspect consists in that the same disk-like cam has, on one face, the track for actuating the stroke of the lower piston and, on the opposite face, the track for actuating the oscillation of the dispenser body 1.

From what has been described above it is evident that the invention achieves the proposed aim and objects, and in particular attention is called once more to the great constructive simplicity and to the great reliability in operation that arises from a structure that inherently ensures synchronous movements.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements.

The disclosures in Italian Patent Application No. MI2001A002262 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A movement device for infusion dispenser assemblies, particularly for espresso coffee machines, comprising a dispenser body (1) that forms an infusion chamber (6) and is supported by a supporting frame (2), a lower or dispensing piston (10) being movable in said infusion chamber (6), an upper or infusion piston (11) being insertable in said infusion chamber (6), **characterized in that** it comprises actuation means (20, 31) for actuating said lower piston (10) adapted to guide positively the translational motion of said lower piston (10) during the upward or expulsion stroke and during the descent or return stroke.

2. The movement device according to claim 1, **characterized in that** said actuation means comprise a disk-like cam (20) that is rotatably supported on the axis passing through seats (4) provided in a pair of lugs (3) formed in said dispenser body (1), which is mounted so that it can oscillate with respect to said supporting frame (2).

3. The movement device according to the preceding claims, **characterized in that** said disk-like cam (20) comprises, on one face, a first cam (21) that forms a track (22) that is delimited by a continuous internal edge (23) and by an outer rim (24).

4. The movement device according to one or more of the preceding claims, **characterized in that** said actuation means comprise a movement lever (31) that is pivoted (32) to said body (1) and has a cam follower portion (30) that is accommodated in said track (22), an actuation fork (33) being also provided that can engage the lower end of a stem (35) that is connected to said lower piston.

5. The movement device according to one or more of the preceding claims, **characterized in that** said stem (35) is rigidly coupled to a block (36) that is provided with a guiding arm (37) that can engage by contact a cylindrical body that protrudes from said disk-like cam (20).

6. The movement device according to one or more of the preceding claims, **characterized in that** said outer rim (24) of said track (22) that constitutes said first cam (21) comprises a gap (24a) that can be arranged in the lower position with the lower piston (10) arranged in the lower dispensing position in order to allow an additional downward stroke of said lower piston (10).

7. The movement device according to one or more of the preceding claims, **characterized in that** it comprises, on said disk-like cam (20), on the opposite face with respect to the face provided with said first cam (21), a second cam (50) that has a second closed track (51) that can be engaged by a second cam follower (52), which is connected to a lever (53) for actuating the oscillation of said dispenser body (1).

8. Method for providing synchronization between the movement of a lower piston movable in an infusion chamber as set forth in any of the claims 1-7 and the infusion chamber, **characterized in that** it comprises the step of providing positive guiding of the translational motion of the lower piston, by way of actuation means, during upward or expulsion stroke and during descent or return stroke thereof.
